# EUROPEAN PATENT SPECIFICATION

(11) **EP 1 564 423 B1**
(45) Date of publication and mention of the grant of the patent: **24.01.2007**
(21) Application number: 03762860.9
(22) Date of filing: 12.05.2003
(51) Int. Cl.: F16B 25/10

(54) **HEAT RESISTANT DRILL SCREW**
WÄRMEBESTÄNDIGE BOHRSCHRAUBE
VIS DE FORAGE RESISTANT A CHAUD

(30) Priority: 04.07.2002 JP 2002195918
(43) Date of publication of application: 17.08.2005
(73) Proprietor: Shinjo MFG. Co., Ltd., Osaka-shi, Osaka 557-0034 (JP)
(72) Inventor: Shinjo, Katsumi, Osaka-shi, Osaka 557-0034 (JP)
(74) Representative: Gritschneder, Martin
(86) International application number: PCT/JP2003/005915
(87) International publication number: WO 2004/005732

(56) References cited:
- WO-A-02/04822
- JP-A- 2 142 911
- JP-A- 3 277 804
- JP-A- 6 087 080
- JP-A- 6 264 194
- JP-A- 10 036 945
- JP-A- 10 298 646
- US-A- 5 755 542
- US-A- 6 109 851

## Description

### TECHNICAL FIELD

The present invention relates to a heat-resistant self drilling tapping screw allowing local quenching, in which a drill part and a tapping screw part configured by a chrome series stainless steel are quenched to provide perforation function (drilling function) and tap function (tapping function) at extremely high level, and a tightening screw part and a screw head part configured by a nickel series stainless steel are not quenched to provide high intensity as well as high corrosion-resistance without danger of delayed fracture.

### BACKGROUND TECHNOLOGY

As well known in the art, the self drilling tapping screws are screw members with a plurality of functions of performing perforation (drilling) per se, tapping (screwthread cutting: tapping) per se, and screw fastening per se to the subject, e.g. when fixing a metal panel such as a roof cover or a wall surface to a supporting steel.

For example, perforation is performed to both the metal panel and the supporting steel without providing a prepared hole to the metal panel and the supporting steel, i.e. while tapping is performed to the perforated hole, thus eventually fixing the relevant metal panel to the supporting steel by thread fastening. The self drilling tapping screws are used in large quantity since the prepared hole is not necessary. However, most of the conventional self drilling tapping screws provided are surface hardened by carburizing and quenching low-carbon steel.

The self drilling tapping screw is required to have several mechanically and physically different functions to respond to the intended use mentioned above. That is, the required function are a perforation function for perforating the metal material and the like, a tapping function for tapping the metal material and the like, and a fastening function for fixing the metal panel to the supporting steel.

Recently, due to acid-rain, a stainless steel plate is used in place of the color steel plate. In this case, problems of low heat conductivity, delay of diffusion of frictional heat of the drill tip during perforation, and local temperature increase by thermal storage are present as properties of the stainless steel plate, and heat-resistance of the self drilling tapping screw is required to solve such problems.

Further, in the self drilling tapping screw, in addition to the above mentioned five functional requirements, a structure capable of industrial mass production is also required as an important factor because the relevant self drilling tapping screw is consumed in large amount.

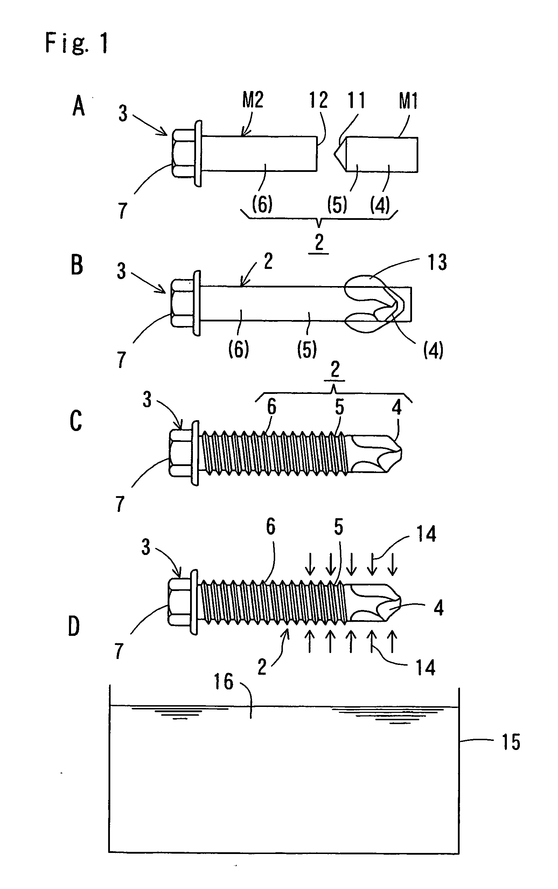

This type of self drilling tapping screw is standardized in detail in the item of the self drilling tapping screws in JIS-B1125-1990 in Japanese Industrial Standards (JIS). The self drilling tapping screw of Fig. 1 is a screw member of a special structure including a shaft 2 and a head 3, which shaft 2 consists of a drilling part 4 with a perforation function, a tapping screw part 5 with a tapping (thread cutting) function, and a fastening screw part 6 with a thread fastening function, and which head 3 consists of an engaging part 7 for engaging with a rotating tool.

The conventional self drilling tapping screw is formed by a low-carbon steel material, and after formation, is subjected to a corrosion-resistant plating process after carburizing, hardening and quenching the surface layer. The surface quenching hardness obtained from the above carbon steel material of low-carbon content is high, and for example, satisfies the hardness of the drill blade edge necessary to drill the metal panel and the supporting steel member.

The important point is, however, that for the quenching hardness of the carbon steel by carburization and the like, quenching slows down when subjected to thermal effect exceeding 200 degrees, thus lowering the quenching hardness and the blade edge becomes unusable. Particularly, the thermal effect on sharp locations such as the drill blade edge is significant, and as a result, the blade edge is rounded by friction and drilling. As a countermeasure for such problem, in an aim to suppress heat generation during drilling, oil is applied to the drill tip, or the self drilling tapping screw made of SUS-410 stainless steel having the following problems has been used.

The SUS-410 stainless steel is a 13 chrome series stainless steel belonging to the field of heat-resistant steel based on the performance of chrome, and a significant lowering of hardness does not occur even if subjected to a heat exceeding 200 degrees, and drilling is secured (refer to JIS G4311 heat-resistant steel rod).

However, the self drilling tapping screw made of the above mentioned SUS-410 stainless steel has the following disadvantages. That is, the SUS-410 stainless steel has a low carbon content (0.15% Max), and obtains drilling performance by carrying out surface hardening (equal to or above 800Hv) by adding nitrogen to the furnace during quenching. However, even the quenching hardness obtained from the carbon content of such extent may become the cause of delay fracture if the hardness becomes 450Hv at the deep part. Further, in reality, when the self drilling tapping screw made of SUS-410 stainless steel is used, shaft breaking and head flying accidents occur after fastening.

The surface hardness of the self drilling tapping screw to which low-carbon steel is carburized and quenched is very high but the internal hardness is equal to or below 450Hv in JIS. The reason for this is to prevent delayed fracture by intergranular corrosion under stress (shaft force) environment, but recently, it has been reduced to equal to or below 400Hv by ISO, the international standard, and reduction thereof is also being considered in JIS. Thus, the core hardness of 450Hv when using SUS-410 is dangerous.

Further, the nitride layer of the surface lowers the corrosion-resistance of the stainless steel base metal, and has the disadvantage that corrosion-resistance of the stainless steel can not be secured.

WO 02/04822 discloses a self-tapping screw with the features of the prior art portion of claim 1. The fastening screw part and the screw head part are made of stainless, purely ferritic or austenitic steel and the drill part and tapping screw part are made of martensitic, stainless steel with 0.04 % to 0.3 % carbon and 8 % to 20 % chrome, so that the whole screw including the drill part is made of stainless steel. The known self drilling tapping screw is suitable for drilling stainless steel sheets.

JP 6-087080 discloses a self-tapping screw wherein the fastening screw part and the screw head part are made of austenitic stainless steel as base material and the drill part and tapping screw part are carburised and made of low carbon steel as base material.

JP 10-036945 discloses a self-tapping screw made of a martensitic stainless steel added with alloy elements using SUS 410 as the base having 11 to 15 % chrome.

### DISCLOSURE OF THE INVENTION

The invention as claimed in claim 1 solves the problem of how to provide a heat-resistant self drilling tapping screw that has no delayed fracture and that satisfies high corrosion-resistance and high tensile strength in proposing the heat-resistant self drilling tapping screw adapted to drilling the stainless steel plate.

In other words, the basic concept of the present invention consists in a heat-resistant self drilling tapping screw in which the entire heat-resistant self drilling tapping screw is not formed with a single chrome series (400 series) stainless steel or quenched entirely, and which avoids using chrome of low carbon series with the surface hardness method, forms the drill part and the tapping screw part adjacent to the drill part with the chrome series high-carbon stainless steel, and forms the fastening screw part including the screw head part with the nickel series (300 series) stainless steel to allow drilling of the stainless steel plate, and further to obtain higher corrosion-resistance than the SUS-410stainless steel.

The heat-resistant self drilling tapping screw of the invention includes a drill part, a tapping screw part connected to the drill part, a fastening screw part connected to the tapping screw part, and a screw head part for conducting and providing a turning force. The drill part and the tapping screw part are made of a heat-resistant high-carbon chrome series stainless steel, and the fastening screw part includes the screw head part is made of a nickel series stainless steel.

The drill part and the tapping screw part connected to the drill part are made of SUS-420J2 steel with the carbon content being substantially equal to the carbon content (0.32 to 0.38) corresponding to S-35C or the carbon content (0.35 to 0.41) corresponding to S-38C in the standard JIS-G4051 (carbon steels for machine structural use).

The nickel series stainless steel of the fastening screw part including the screw head part is a stainless steel satisfying high corrosion-resistance and high tensile force guaranteeing ISO A-2-70 and A-4-70 after thread rolling.

The fastening screw part including the screw head part is made of SUS-305J1 or SUS-316.

The drill part and the tapping screw part connected to the drill part can be quench hardened by high-frequency heating.

Further, the chrome series stainless steel configuring the drill part and the tapping screw part connected to the drill part, and the nickel series stainless steel configuring the fastening screw part including the screw head part can be integrally bonded into a rivet shape by resistance welding, prior to forming each of the parts.

### BRIEF DESCRIPTION OF THE DRAWINGS

Fig. 1 shows a specific configuration example of a heat-resistant self drilling tapping screw according to the present invention;
Fig. 1A is a schematic side view showing an initial state and a step of joining two members, the two members being a first member M1 made of a chrome series stainless steel and a second member M2 made of a nickel series stainless steel;
Fig. 1B is a schematic side view showing a step of cold forging the drill blade after joining the first and second members;
Fig. 1C is a schematic side view showing a step of rolling the screw part in the self drilling tapping screw and removing the scraps; and
Fig. 1D is a schematic side view showing both a high-frequency heating step to the drill blade and the tapping screw part, as well as the quenching medium tank for quenching.

### DETAILED DESCRIPTION OF THE PREFERRED EMBODIMENTS

The heat-resistant self drilling tapping screw of the present invention will now be described in detail based on specific embodiments shown in the figures.

The important point in the present invention is that the heat-resistant self drilling tapping screw of the present invention is configured by a first member M1 made of a chrome series stainless steel, and a second member M2 made of a nickel series stainless steel, as formed in the configuration shown in Fig.1A, in advance. In other words, the present invention provides the heat-resistant self drilling tapping screw, which configuration is not formed entirely with a single chrome series (400 series) stainless steel, or quenched entirely, and which avoids using chrome steel of low-carbon series with surface hardening method, and has the drill part 4 and the tapping screw part 5 connected to the drill part 4 made of the heat-resistant chrome series (400 series) high-carbon stainless steel, and the fastening screw part 6 including the screw head part 3 made of the nickel series (300 series) stainless steel, thereby allowing drilling to be effectively performed even to a stainless steel plate, and obtaining higher corrosion-resistance than the self drilling tapping screw made of SUS-410.

On the other hand, the fastening screw part 6 including the above mentioned screw head part 3 is the nickel series (300 series) stainless steel, and is formed by SUS-305J1 or SUS-316 that can satisfy A2-70 and A4-70 of ISO, the international standard, for the high tensile force of the screw made of stainless steel after thread rolling. The tensile force of the above ISO-A2-70 or A4-70 can be satisfied with work hardening by wire drawing or work hardening by drawing during header working, and thread rolling.

Further, more specifically, the chrome series (400 series) high-carbon stainless steel forming the drill part 4 and the tapping screw part 5 connected to the drill part 4 is SUS-420J2, and the carbon content thereof is the same as S-35C (0.32 to 0.38 %) or as S-38C (0.35 to 0.41 %) by JIS G4051 (carbon steels for machine structural use). The hardness equal to or greater than 600Hv necessary for drilling can be readily achieved due to such carbon content without the surface hardening method.

Further, in the present invention, quenching of the chrome series (400 series) high-carbon stainless steel forming the drill part 4 and the tapping screw part 5 connected to the drill part 4 is carried out by means of water cooling by local heating with high-frequency, and thus the fastening screw part 6 including the screw head part 3 is substantially not thermally affected, and therefore, the characteristic of the nickel series (300 series) stainless steel is not affected.

The first member M1 has a linear dimension configuring one part of the screw shaft 2, that is, the part corresponding to the drill part 4 and the tapping screw part 5 in the completed heat-resistant self drilling tapping screw 1, and includes an electric resistance welding projection 11 at one end in the shaft direction. The second member M2, on the other hand, has a linear dimension configuring the screw head part 3 and one part of the screw shaft 2, that is, the part corresponding to the fastening screw part 6 with a thread-fastening fastening function in the completed heat-resistant self drilling tapping screw 1, and includes an electric resistance welding end 12 at one end in the shaft direction.

The first member M1 and the second member M2 are integrally joined and coupled by means of electric resistance welding, with the electric resistance welding projection 11 in the first member M1 and the electric resistance welding end 12 in the second member M2 confronting in the shaft direction.

After integrally joining and coupling by electric resistance welding, the drill part 4 in the heat-resistance self drilling tapping screw 1 is processed by cold forging (refer to Fig. 1B). In this case, the scraps 13 produced by cold forging are appropriately removed. On the other hand, the screw part in the heat-resistant self drilling tapping screw 1 is formed by rolling process, thereby forming the tapping screw part 5 as well as the fastening screw part 6 (refer to Fig. 1C).

Subsequently, the important aspect of the present invention is in the quenching process to the heat-resistance self drilling tapping screw formed as above. In the present invention, the quenching process to the heat-resistance self drilling tapping screw is performed locally (partially) by induction hardening process 14. The induction hardening is a hardening process that rapidly heats the surface of the steel member by high-frequency induced current, and then rapidly cools the same in the quenching medium 16 in the quenching tank 15.

## Claims

1. A heat-resistant self drilling tapping screw for drilling a stainless steel member, the heat resistant self drilling tapping screw comprising:
a drill part (4);
a tapping screw part (5) connected to the drill part (4);
a fastening screw part (6) connected to the tapping screw part (5); and
a screw head part (3) for conducting and providing a turning force; wherein
the drill part (4) and the tapping screw part (5) are made of a heat resistant high-carbon chrome series stainless steel;
**characterized in that**
the fastening screw part (6) including the screw head part (3) is made of a nickel series stainless steel;
the drill part (4) and the tapping screw part (5) connected to the drill part (4) are made of SUS-420J2 steel with a carbon content being substantially equal to the carbon content (0.32 to 0.38 %) corresponding to S-35C or to the carbon content (0.35 to 0.41 %) corresponding to S-38C in standard JIS-G4051 (carbon steels for machine structural use); and
the nickel series stainless steel of the fastening screw part (6) including the screw head part (3) is SUS-305J1 or SUS-316 and consists of a stainless steel satisfying high corrosion-resistance and high tensile force guaranteeing ISO A-2-70 and A-4-70 after thread rolling.

2. The heat-resistant self drilling tapping screw as claimed in claim 1, wherein the drill part (4) and the tapping screw part (5) connected to the drill part (4) are quench hardened by high-frequency heating.

3. The heat-resistant self drilling tapping screw as claimed in claim 1 or 2, wherein the chrome series stainless steel configuring the drill part (4) and the tapping screw part (5) connected to the drill part (4), and the nickel series stainless steel configuring the fastening screw part (6) including the screw head part (3) are integrally bonded into a rivet shape by resistance welding, prior to forming each of the parts.

## Patentansprüche

1. Wärmebeständige selbstbohrende Schneidschraube zum Durchbohren eines Edelstahlelements, wobei die wärmebeständige selbstbohrende Schneidschraube umfasst:
einen Bohrteil (4);
einen Schneidschraubenteil (5), der mit dem Bohrteil (4) verbunden ist;
einen Befestigungsschraubenteil (6), der mit dem Schneidschraubenteil (5) verbunden ist; und
einen Schraubenkopfteil (3), um eine Drehkraft zu leiten und zur Verfügung zu stellen; wobei
der Bohrteil (4) und der Schneidschraubenteil (5) aus einem wärmebeständigen hochgekohlten Chromserien-Edelstahl hergestellt sind;
**dadurch gekennzeichnet, dass**
der Befestigungsschraubenteil (6) einschließlich des Schraubenkopfteils (3) aus einem Nickelserien-Edelstahl hergestellt ist;
der Bohrteil (4) und der mit dem Bohrteil (4) verbundene Schneidschraubenteil (5) aus SUS-420J2-Stahl mit einem Kohlenstoffgehalt, der im Wesentlichen gleich dem Kohlenstoffgehalt (0,32 bis 0,38%) entsprechend S-35C oder dem Kohlenstoffgehalt (0,35 bis 0,41%) entsprechend S-38C in Standard-JIS-G4051 (Kohlenstoffstähle zur Maschinenkonstruktionsverwendung), hergestellt sind; und
der Nickelserien-Edelstahl des Befestigungsschraubenteils (6) einschließlich des Schraubenkopfteils (3) SUS-305J1 oder SUS-316 ist und einen Edelstahl aufweist, der hoher Korrosionsbeständigkeit und hoher Zugkraft entspricht, wobei ISO A-2-70 und A-4-70 nach Gewindewalzen gewährleistet sind.

2. Wärmebeständige selbstbohrende Schneidschraube nach Anspruch 1, bei der der Bohrteil (4) und der mit dem Bohrteil (4) verbundene Schneidschraubenteil (5) durch Hochfrequenzerwärmen mittels Abschreckung gehärtet sind.

3. Wärmebeständige selbstbohrende Schneidschraube nach Anspruch 1 oder 2, bei der der Chromserien-Edelstahl, der den Bohrteil (4) und den mit dem Bohrteil (4) verbundenen Schneidschraubenteil (5) bildet, und der Nickelserien-Edelstahl, der den Befestigungsschraubenteil (6) einschließlich des Schraubenkopfteils (3) bildet, durch Widerstandsschweißen als Einheit in eine Nietform verbunden werden, bevor jeder der Teile gebildet wird.

## Revendications

1. Vis à auto-perçage et taraudage résistant à la chaleur pour percer un élément en acier inoxydable, la vis à auto-perçage et taraudage résistant à la chaleur comprenant :
une partie perçage (4) ;
une partie taraudage (5) reliée à la partie perçage (4) ;
une partie vis de fixation (6) reliée à la partie taraudage (5) ; et
une partie tête de vis (3) pour transmettre et appliquer une force de rotation ;
dans laquelle la partie perçage (4) et la partie taraudage (5) sont en un acier inoxydable au chrome à haute teneur en carbone résistant à la chaleur ;
**caractérisée en ce que** :
la partie vis de fixation (6) incluant la partie tête de vis (3) est en acier inoxydable au nickel ;
la partie perçage (4) et la partie taraudage (5) reliée à la partie perçage (4) sont en acier SUS-420J2 ayant une teneur en carbone sensiblement égale à la teneur en carbone (0,32 à 0,38 %) qui correspond à S-35C ou à la teneur en carbone (0,35 à 0,41 %) qui correspond à S-38C dans la norme JIS-G4051 (aciers au carbone pour structures de machine) ; et
l'acier inoxydable au nickel de la partie vis de fixation (6) incluant la partie tête de vis (3) est SUS-305J1 ou SUS-316 et il consiste en un acier inoxydable qui possède une résistance élevée à la corrosion et une résistance élevée à la traction satisfaisant aux normes ISO A-2-70 et A-4-70 après roulage de filetage.

2. Vis à auto-perçage et taraudage résistant à la chaleur selon la revendication 1, dans laquelle la partie perçage (4) et la partie taraudage (5) reliée à la partie perçage (4) sont durcies par trempe par chauffage haute fréquence.

3. Vis à auto-perçage et taraudage résistant à la chaleur selon la revendication 1 ou 2, dans laquelle l'acier inoxydable au chrome configurant la partie perçage (4) et la partie taraudage (5) reliée à la partie perçage (4), et l'acier inoxydable au nickel configurant la partie vis de fixation (6) incluant la partie tête de vis (3) sont intégralement liés en forme de rivet par soudage par résistance, avant le formage de chacune des parties.
